# EUROPÄISCHE PATENTSCHRIFT

(11) **EP 3 755 604 B1**
(45) Veröffentlichungstag und Bekanntmachung des Hinweises auf die Patenterteilung: **02.03.2022**
(21) Anmeldenummer: 19704279.9
(22) Anmeldetag: 05.02.2019
(51) Int. Cl.: B62D 21/00, B62D 29/00

(54) **VERSTÄRKUNGSMITTEL UND VERFAHREN ZUR HOHLRAUMVERSTÄRKUNG EINER ROHBAUSTRUKTUR**
REINFORCEMENT MEANS AND METHOD FOR REINFORCING A CAVITY IN A CARCASS STRUCTURE
MOYEN DE RENFORCEMENT ET PROCÉDÉ DE RENFORCEMENT DE CAVITÉ D'UNE OSSATURE DE COQUE

(30) Priorität: 19.02.2018 DE 102018202444
(43) Veröffentlichungstag der Anmeldung: 30.12.2020
(73) Patentinhaber: Audi AG, 85045 Ingolstadt (DE)
(72) Erfinder: JÄSCHKE, Anja, 92339 Beilngries (DE)
(86) Internationale Anmeldenummer: PCT/EP2019/052752
(87) Internationale Veröffentlichungsnummer: WO 2019/158396

(56) Entgegenhaltungen:
- EP-A2- 1 356 911
- WO-A1-2015/082681
- BE-A- 664 050
- JP-A- 2004 262 096
- US-A1- 2012 235 442

## Beschreibung

Die Erfindung betrifft ein Verstärkungsmittel zur Stabilisierung eines durch verbundene Hohlprofile gebildeten Hohlraums. Des Weiteren betrifft die Erfindung ein Verfahren zur Hohlraumverstärkung einer Rohbaustruktur mit einem solchen Verstärkungsmittel.

Verfahren zur Hohlraumverstärkung einer Rohbaustruktur und korrespondierende Strukturbauteile für Fahrzeugkarosserien sind in zahlreichen Variationen bekannt. Hohlraumteile werden üblicher Weise mit eingeschweißten Metallverstärkungen gegen Knicken und Beulen im Lastfall verstärkt. Zudem werden Einlegeteile aus Polyamid und Epoxidharz oder Metall eingesetzt. Des Weiteren können hohle Karosseriebauteile durch Patchen mit faserverstärkten Kunststoffmatten verstärkt werden, welche in einem Werkzeug auf das Karosseriebauteil aufgebracht und unter Zufuhr von Wärme ausgehärtet bzw. umgeformt werden. Alle Versteifungen verhindern ein Ausknicken in bestimmten Belastungspunkten, während die energieverzehrende Wirkung nicht optimal ist. Zudem sind Verfahren bekannt, welche energieverzehrende Körper und eine Vergussmasse in einen Hohlraum des Strukturbauteils einfüllen und aushärten. Die Vergussmasse fixiert üblicherweise die energieverzehrenden Körper nach dem Aushärten. Der mit energieverzehrenden Körpern gefüllte Hohlraum verzehrt üblicherweise mehr Energie und dämpft eingeleitete Kräfte durch Verformung der energieverzehrenden Körper besser als ein nicht mit energieverzehrenden Körpern gefüllter Hohlraum.

Des Weiteren sind Verstärkungen mit Wabenstrukturen und/oder Wellenprofilen und/oder deformierbaren Schäumen bekannt. Hierbei werden beispielsweise Wellenprofilverstärkungen in einem Schwellerbereich angeordnet. Wabenstrukturen werden mit umliegenden Bereichen des zu verstärkenden Bereichs verbunden. So können beispielsweise die Wabenstrukturen zu diesem Zweck einseitig in ein Spritzgusswerkzeug eingelegt und/oder allseitig durch eine großflächige Verklebung mit Strukturkleber auf das zu verstärkende Bauteil aufgebracht werden. Der Hohlraum kann zudem mit dem deformierbaren Schaum ausgeschäumt werden.

Aus der DE 197 07 462 Cl ist ein gepanzertes Fahrzeug mit verstärkten Karosseriebauteilen bekannt, welche eine Hohlraumverstärkung aufweisen. Die Hohlraumverstärkung schützt einen Fahrzeuginsassen vor einem Durchschuss. Um die Hohlraumverstärkung zu schaffen, ist in die Hohlräume der Strukturbauteile der Karosserie eine Vergussmasse eingebracht, in welche eine Vielzahl reglos angeordneter energieverzehrender Körper und/oder ballistische Gewebeteile eingebracht sind. Das Strukturbauteil ist insbesondere als A-Säule und/oder als B-Säule und/oder C-Säule ausgeführt. Strukturbauteile aus faserverstärkten Kunststoffteilen und Metallblechschalen weisen einen relativ hellhörigen Charakter auf, was sich negativ auf den Geräuschkomfort eines solchen Fahrzeugs auswirkt. Daher wird üblicher Weise Dämpfungsmaterial, das mit zumindest einem Bauteilbereich des Strukturbauteils verklebt ist oder Schottbleche bzw. Kunststoffschottteile in solche Strukturen eingebracht. Diese Akustikschotts sind dadurch gekennzeichnet, dass es Bauteile sind, die in den Rohbau eingebracht werden und bei denen eine Verbindung zwischen dem Dämpfungsmaterial und dem Strukturbauteil und zum anderen eine besonders gute Dämpfung der Schallabstrahlung des Strukturbauteils gewährleistet wird.

Die DE 10 2010 012 722 A1 offenbart eine Rohbaustruktur für ein Kraftfahrzeug mit wenigstens einem als Versteifungsstrebe ausgebildeten Strukturbauteil, welches einen Hohlraum aufweist. Der Hohlraum umfasst zumindest eine Kammer, innerhalb welcher ein Strukturelement angeordnet ist, welches eine innere Struktur mit einer Vielzahl von weiteren Hohlräumen aufweist. Die Vielzahl von Hohlräumen werden durch eine Schaumstruktur ausgebildet, welche aus einem porösen Metallschaum ausgebildet ist.

Aus der EP 1 062 397 B1 ist ein Doppellagenblech aus zwei einen Zwischenraum zwischen sich bildenden Deckblechen, von denen mindestens ein Deckblech als Noppenblech ausgebildet ist und an seinen Noppenspitzen mit dem anderen Deckblech verschweißt oder angelötet ist. Der Zwischenraum ist mit einem Füllmaterial ausgefüllt. Als Füllmaterial wird vorzugsweise ein Kunststoff verwendet, in welchem dispergierte Kunststoffhohlkügelchen verteilt sind. Weitere Beispiele sind von JP 2004 262096 und US2012235442 bekannt.

Es ist die Aufgabe der vorliegenden Erfindung, ein Verstärkungsmittel zur Stabilisierung eines durch verbundene Hohlprofile gebildeten Hohlraums sowie ein Verfahren zur Verstärkung einer Rohbaustruktur bereitzustellen, welche eine verbesserte Schalldämpfung bei einer gleichzeitig effizienten Ausnutzung des Bauraums und eine verstärkende Struktur zur Energieverzehrung ermöglichen.

Diese Aufgabe wird durch ein Verstärkungsmittel mit den Merkmalen des Patentanspruchs 1 und durch ein Verfahren zur Verstärkung einer Rohbaustruktur mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Um ein Verstärkungsmittel zur Stabilisierung eines durch verbundene Hohlprofile gebildeten Hohlraums bereitzustellen, welches eine verbesserte Schalldämpfung bei einer gleichzeitig effizienten Ausnutzung des Bauraums und eine verstärkende Struktur zur Energieverzehrung ermöglichen, ist eine dehnbare Hülle und Schüttgut vorgesehen, welches in der dehnbaren Hülle eingeschlossen ist. Das Schüttgut ist derart ausgestaltet, dass es bei Einwirkung einer Aktivierungstemperatur expandiert und sich zu einem Masseblock verbindet. Die dehnbare Hülle ist derart ausgestaltet, dass sie eine Verdichtung und einen Druckaufbau des expandierenden Schüttguts bewirkt.

Zudem wird ein Verfahren zur Hohlraumverstärkung einer Rohbaustruktur mit wenigstens einem durch verbundene Hohlprofile gebildeten Hohlraum vorgeschlagen, welches folgende Schritte umfasst: Bereitstellen mindestens eines solchen Verstärkungsmittels. Einführen des mindestens einen Verstärkungsmittels in den durch verbundene Hohlprofile gebildeten Hohlraum. Erwärmen des mindestens einen Verstärkungsmittels auf wenigstens die Aktivierungstemperatur, so dass dessen Schüttgut expandiert und sich zu einem Masseblock verbindet.

Die erzeugte Rohbaustruktur zeichnet sich dadurch aus, dass der wenigstens eine Hohlraum zumindest teilweise mit dem Verstärkungsmittel ausgefüllt ist. Der vorhandene Hohlraum wird funktional genutzt, wodurch eine effiziente Ausnutzung des vorhandenen Bauraums erzielt wird, so dass für die Dämpfung des Hohlprofils bzw. der Rohrbaustruktur und zur Verzehrung von Crashenergie kein zusätzlicher Bauraum benötigt wird.

Weiterhin wird eine aufwendige Herstellung von Verstärkungsteilen und die zugehörige Verbindungstechnik zum Einbringen dieser Verstärkungen eingespart. Zusätzlich kann die Akustik dieser Hohlprofile verbessert werden und damit Schottteile und deren Kosten eingespart werden. Schalen der Hohlprofile können eine Abstützung der dehnbaren Hülle mit dem expandierenden Schüttgut an der Bauteilwand ausbilden. Das expandierende Schüttgut wird in der dehnbaren Hülle in die Fahrzeugstruktur eingebracht, expandiert und härtet aus. Dabei kann in vorteilhafter Weise eine vorhandene Prozesswärme im Lackierofen genutzt werden. Damit entsteht eine Karosseriestruktur bzw. Rohbaustruktur in Leichtbauweise, die eine gute Körperschalldämpfung aufweist. Die Hohlprofile sind vorzugsweise aus einem Verbundmaterial oder aus einem Leichtmetall, wie Aluminium, Magnesium usw., oder aus einer Metalllegierung hergestellt. Die mit dem Dämpfungs- und energieverzehrenden Schüttgut ausgefüllte dehnbare Hülle ist idealer Weise mit den, den Hohlraum ausbildenden Hohlprofilen verbunden. Das führt zur Verringerung des in das Hohlprofil bzw. Strukturbauteil eingeleiteten Körperschalls. Durch mehrere eingebrachte Verstärkungsmittel und damit eine Mehrzahl voneinander abgetrennter Hohlräume, welche jeweils mit dem Verstärkungsmittel ausgefüllt sind, wird nicht nur die Steifigkeit der Rohbaustruktur erhöht, sondern auch das Akustikverhalten und die Energieverzehrung verbessert.

In vorteilhafter Ausgestaltung des erfindungsgemäßen Verstärkungsmittels kann das Schüttgut als granulatähnliches Füllmaterial überwiegend duroplastische oder thermoplastische Partikel aufweisen. Alternativ kann das Schüttgut als granulatähnliches Füllmaterial überwiegend ein Gemisch aus expandierbarem Material und Füllstoffen wie Blähgas, Metallkugeln, Tonkugeln und/oder Aluminiumpartikeln aufweisen. Zudem kann innerhalb der Hülle eine wabenähnliche Verstärkung angeordnet sein, welche vom expandierten Schüttgut eingeschlossen werden kann. Das bedeutet, dass das Schüttgut beim Einfüllen in die Hülle die vorzugsweise dreidimensionale wabenähnliche Verstärkung umfließt und nach dem Expansionsvorgang einschließt. Die wabenähnliche Verstärkung kann beispielsweise durch Textiltechnik, wie Stricken, oder durch formgebende Verfahren, wie Spritzgießen, Metallgießen, Blasformen, Pressen als geschlossenzelliger wabenförmiger Körper hergestellt werden. Das Schüttgut kann in vorteilhafter Weise an die spezifischen Anforderungen angepasst, variiert und kombiniert werden. Durch den begrenzten Raum bei der Ausdehnung in der dehnbaren Hülle wird eine "Haut" des Verstärkungsmittel gebildet und das Schüttgut verschweißt bei der Aktivierungstemperatur zu dem Masseblock.

In weiterer vorteilhafter Ausgestaltung des erfindungsgemäßen Verstärkungsmittels kann eine geometrische Grundform der dehnbaren Hülle an eine geometrische Form des Hohlraums angepasst werden.

In weiterer vorteilhafter Ausgestaltung des erfindungsgemäßen Verstärkungsmittels kann eine Verbundfolie die dehnbare Hülle ausbilden. Zudem kann eine Metallfolie und/oder eine textile Deckschicht die Verbundfolie verstärken.

In weiterer vorteilhafter Ausgestaltung des erfindungsgemäßen Verfahrens kann der Masseblock derart ausgestaltet sein, dass er eine mechanisch stabilisierende Wirkung aufweist. Zusätzlich oder alternativ kann der Masseblock derart ausgestaltet sein, dass er eine schalldämmende Wirkung aufweist.

In weiterer vorteilhafter Ausgestaltung des erfindungsgemäßen Verfahrens kann die dehnbare Hülle bei Temperatureinwirkung an der Außenseite aufschmelzen und als Haftvermittler an der zu verstärkenden Rohbaustruktur haften und diese nach dem Erkalten und Verfestigen verstärken. Das Erwärmen des Verstärkungsmittels kann während eines Durchlauf eines Trocknungsofens beim Lackierprozess erfolgen. Das bedeutet, dass die Aktivierungswärme für die Expansion des Schüttguts und/oder die Schmelzwärme für die Außenseite der dehnbaren Hülle durch die Prozesswärme beim Lackieren der Rohbaustruktur zur Verfügung gestellt wird.

In weiterer vorteilhafter Ausgestaltung des erfindungsgemäßen Verfahrens können mindestens zwei Verstärkungsmittel in einem Hohlraum über ein Verbindungselement miteinander verbunden werden. Hierbei können die mindestens zwei Verstärkungsmittel eine gemeinsame Hülle aufweisen, welche abschnittsweise nicht mit Schüttgut gefüllt wird, wobei der nicht mit Schüttgut gefüllte Abschnitt der Hülle das Verbindungselement zwischen den mindestens zwei Verstärkungsmitteln ausbilden kann. Bei dieser Ausführungsform ist die gemeinsame Hülle beispielsweis als Schlauch ausgeführt, welcher abschnittsweise mit Schüttgut gefüllt wird, aber auch Abschnitte ohne Schüttgut aufweist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische Schnittdarstellung eines ersten Ausführungsbeispiels einer Rohbaustruktur mit einem ersten Ausführungsbeispiel eines Verstärkungsmittel zur Stabilisierung eines durch verbundene Hohlprofile gebildeten Hohlraums;
- Fig. 2: eine schematische Schnittdarstellung eines zweiten Ausführungsbeispiels einer Rohbaustruktur mit einem zweiten Ausführungsbeispiel eines Verstärkungsmittel zur Stabilisierung eines durch verbundene Hohlprofile gebildeten Hohlraums;
- Fig. 3: eine schematische Schnittdarstellung eines dritten Ausführungsbeispiels einer Rohbaustruktur mit einem dritten Ausführungsbeispiel eines Verstärkungsmittel zur Stabilisierung eines durch verbundene Hohlprofile gebildeten Hohlraums;
- Fig. 4: eine schematische Schnittdarstellung eines vierten Ausführungsbeispiels einer Rohbaustruktur mit einem vierten Ausführungsbeispiel eines Verstärkungsmittel zur Stabilisierung eines durch verbundene Hohlprofile gebildeten Hohlraums; und
- Fig. 5: eine schematische Schnittdarstellung eines fünften Ausführungsbeispiels einer Rohbaustruktur mit einem fünften Ausführungsbeispiel eines Verstärkungsmittel zur Stabilisierung eines durch verbundene Hohlprofile gebildeten Hohlraums.

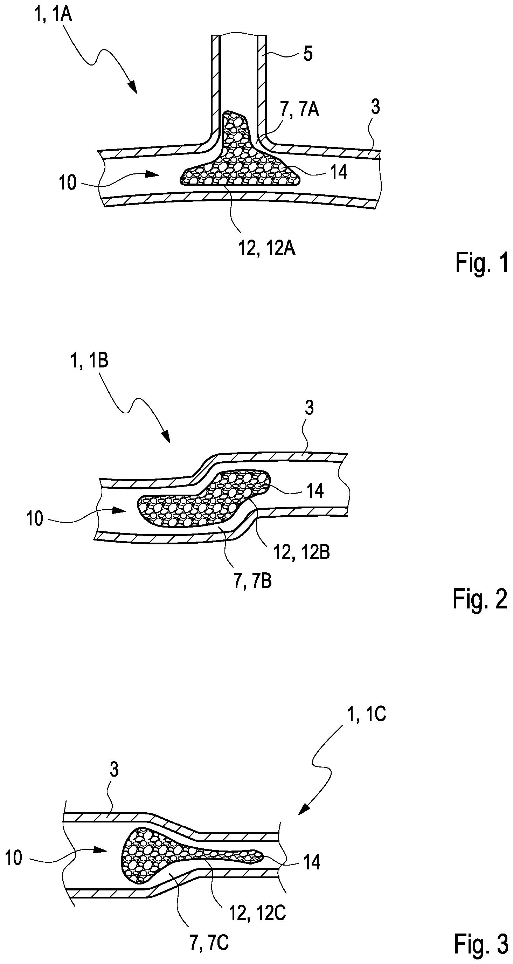

Wie aus Fig. 1 bis 5 ersichtlich ist, weist die Rohbaustruktur 1, 1A, 1B, 1C, 1D, 1E in den dargestellten Ausführungsbeispielen mindestens einen durch verbundene Hohlprofile 3, 5 gebildeten Hohlraum 7, 7A, 7B, 7C, 7D, 7E auf. In welchen zur Stabilisierung mindestens ein erfindungsgemäßes Verstärkungsmittel 10 eingebracht ist.

Wie aus Fig. 1 bis 5 weiter ersichtlich ist, umfasst das Verstärkungsmittel 10 zur Stabilisierung eines durch verbundene Hohlprofile 3, 5 gebildeten Hohlraums 7, 7A, 7B, 7C, 7D, 7E jeweils eine dehnbare Hülle 12, 12A, 12B, 12C, 12D, 12E und Schüttgut 14, welches in der dehnbaren Hülle 12, 12A, 12B, 12C, 12D, 12E eingeschlossen ist. Hierbei ist das Schüttgut 14 derart ausgestaltet, dass es bei Einwirkung einer Aktivierungstemperatur expandiert und sich zu einem Masseblock verbindet. Die dehnbare Hülle 12, 12A, 12B, 12C, 12D, 12E ist derart ausgestaltet, dass sie eine Verdichtung und einen Druckaufbau des expandierenden Schüttguts 14 bewirkt.

In den dargestellten Ausführungsbeispielen ist das expandierende Schüttgut 14 in der dehnbare Hülle 12, 12A, 12B, 12C, 12D, 12E eingeschweißt und in zu stabilisierenden Hohlräume 7, 7A, 7B, 7C, 7D, 7E der Rohbaustrukturen 1, 1A, 1B, 1C, 1D, 1E eingebracht. Wie aus Fig. 1 bis 5 weiter ersichtlich ist, ist eine geometrische Grundform der jeweiligen dehnbaren Hülle 12, 12A, 12B, 12C, 12D, 12E an eine geometrische Form des zugehörigen Hohlraums 7, 7A, 7B, 7C, 7D, 7E angepasst, in welche das Verstärkungsmittel 10 eingebracht ist. Beim Durchlaufen eines Trocknungsofens während der Lackierung der korrespondierenden Rohbaustruktur 1, 1A, 1B, 1C, 1D, 1E expandiert das Schüttgut 14 und verscheißt durch den begrenzten Raum bei der Expansion innerhalb der dehnbaren Hülle 12, 12A, 12B, 12C, 12D, 12E zu einem Masseblock, welcher den zugehörigen Hohlraum 7, 7A, 7B, 7C, 7D, 7E zumindest teilweise ausfüllt. Fig. 1 bis 5 zeigen das Verstärkungsmittel 10 jeweils vor dem Durchlaufen des Trocknungsofens, d.h. vor der Expansion des Schüttguts 14. Die dehnbare Hülle 12, 12A, 12B, 12C, 12D. 12E sorgt für Verdichtung und den Druckaufbau des zu expandierenden Schüttguts 14. Damit wird eine Versteifung in der Rohbaustruktur 1, 1A, 1B, 1C, 1D. 1E ohne zusätzlichen Aufwand erzielt und der gesamte Bauraum genutzt. Die dehnbare Hülle 12, 12A, 12B, 12C, 12D, 12E kann einfach im Hohlraum 7, 7A, 7B, 7C, 7D, 7E der Hohlprofile 3, 5 verbleiben eine zusätzliche Verstärkung der Rohbaustruktur 1, 1A, 1B, 1C, 1D, 1E bewirken. Der Masseblock ist derart ausgestaltet, dass er eine mechanisch stabilisierende Wirkung und/oder eine schalldämmende Wirkung aufweist.

Die Hohlprofile 3, 5 umfassen beispielsweise jeweils zwei Halbschalen, welche eine Abstützung für die dehnbare Hülle 12, 12A, 12B, 12C, 12D, 12E mit dem expandierenden Schüttgut 14 ausbilden. Die Hohlprofile 3, 5 sind vorzugsweise aus einem Verbundmaterial oder aus einem Leichtmetall, wie Aluminium, Magnesium usw., oder aus einer Metalllegierung hergestellt und bilden beispielsweise ein Strukturbauteil wie einen Schweller, einen Längsträger, einen Querträger oder eine Säule der Rohbaustruktur 1, 1A, 1B, 1C, 1D, 1E aus. Aufgrund des geringen Gewichts kann die dehnbare Hülle 12, 12A, 12B, 12C, 12D, 12E im Hohlraum 7, 7A, 7B, 7C, 7D, 7E belassen werden, ohne dass das Gewicht der Rohbaustruktur 1, 1A, 1B, 1C, 1D, 1E signifikant erhöht wird. Das expandierte Schüttgut 14 in der dehnbaren Hülle 12, 12A, 12B, 12C, 12D, 12E füllt den Hohlraum 7, 7A, 7B, 7C, 7D, 7E zumindest teilweise aus, ohne dass Spalten zur Strukturverstärkung entstehen. In einer bevorzugten Ausführungsform haftet die dehnbare Hülle 12, 12A, 12B, 12C, 12D an der Wandung des Hohlraums 7, 7A, 7B, 7C, 7D.

Das Schüttgut 14 kann an die spezifischen Anforderungen angepasst, variiert und kombiniert werden. Das Schüttgut 14 kann beispielsweise als granulatähnliches Füllmaterial überwiegend duroplastische oder thermoplastische Partikel aufweisen. Alternativ kann das Schüttgut 14 überwiegend ein Gemisch aus expandierbarem Material und Füllstoffen wie Blähgas, Metallkugeln, Tonkugeln und/oder Aluminiumpartikeln aufweisen. Zudem kann innerhalb der Hülle 12 eine wabenähnliche Verstärkung angeordnet werden, welche vom expandierten Schüttgut 14 eingeschlossen ist.

In den dargestellten Ausführungsbeispielen bildet eine Verbundfolie die dehnbare Hülle 12, 12A, 12B, 12C, 12D, 12E aus. Zusätzlich kann eine Metallfolie und/oder eine textile Deckschicht die Verbundfolie verstärken. In den dargestellten Ausführungsbeispielen schmilzt die dehnbare Hülle 12, 12A, 12B, 12C, 12D, 12E bei Temperatureinwirkung an der Außenseite auf und haftet als Haftvermittler an der zu verstärkenden Rohbaustruktur 1, 1A, 1B, 1C, 1D, 1E. Nach dem Erkalten verfestigt sich die dehnbare Hülle 12, 12A, 12B, 12C, 12D, 12E an der Wandung des Hohlraum 7, 7A, 7B, 7C, 7D, 7E bzw. an der zu verstärkenden Rohbaustruktur 1, 1A, 1B, 1C, 1D, 1E und verstärkt diese zusätzlich. Die Textilschicht kann gezielt mit Verstärkungsfasern aus Glas, Kohle, Polyaramide oder Metall verstärkt werden, welche in Belastungsrichtung verlaufen.

Das erfindungsgemäße Verfahren zur Hohlraumverstärkung einer Rohbaustruktur 1 mit wenigstens einem durch verbundene Hohlprofile 3, 5 gebildeten Hohlraum 7, umfasst folgende Schritte: Bereitstellen eines oben beschriebenen Verstärkungsmittels 10. Einführen des Verstärkungsmittels 10 in den durch verbundene Hohlprofile 3, 5 gebildeten Hohlraum 7, 7A, 7B, 7C, 7D, 7E. Erwärmen des Verstärkungsmittels 10 auf wenigstens die Aktivierungstemperatur, so dass dessen Schüttgut 14 expandiert und sich zu einem Masseblock verbindet.

Das Erwärmen des Verstärkungsmittels 10 erfolgt bei den dargestellten Ausführungsbeispielen vorzugsweise während eines Durchlauf eines Trocknungsofens bei einem Lackierprozess der Rohbaustruktur 1, 1A, 1B, 1C, 1D, 1E.

Wie aus Fig. 1 weiter ersichtlich ist, umfasst die Rohbaustruktur 1 im dargestellten ersten Ausführungsbeispiel einen Verbindungsknoten 1A, an welchem ein erstes Hohlprofil 3 mit einem zweiten Hohlprofil 5 verbunden ist. Wie aus Fig. 1 weiter ersichtlich ist, weist der ausgebildete Hohlraum 7A und die mit Schüttgut 14 gefüllte dehnbare Hülle 12Ajeweils eine T-Form auf. Durch diese geometrische Grundform der dehnbaren Hülle 12A kann das Verstärkungsmittel 10 nicht im Verbindungsknoten 1A verrutschen.

Wie aus Fig. 2 weiter ersichtlich ist, umfasst die Rohbaustruktur 1 im dargestellten zweiten Ausführungsbeispiel ein Hohlprofil 3 mit einem Knick 1B. Wie aus Fig. 2 weiter ersichtlich ist, weist der ausgebildete Hohlraum 7B und die mit Schüttgut 14 gefüllte dehnbare Hülle 12B jeweils ebenfalls einen Knick 1B auf. Durch diese geometrische Grundform der dehnbaren Hülle 12B kann das Verstärkungsmittel 10 nicht im Knick 1B verrutschen.

Wie aus Fig. 3 weiter ersichtlich ist, umfasst die Rohbaustruktur 1 im dargestellten dritten Ausführungsbeispiel ein Hohlprofil 3 mit einer Verjüngung 1C. Wie aus Fig. 3 weiter ersichtlich ist, weist der ausgebildete Hohlraum 7C und die mit Schüttgut 14 gefüllte dehnbare Hülle 12C jeweils ebenfalls eine Verjüngung 1C auf. Durch diese geometrische Grundform der dehnbaren Hülle 12C kann das Verstärkungsmittel 10 nicht an der Verjüngung 1C verrutschen.

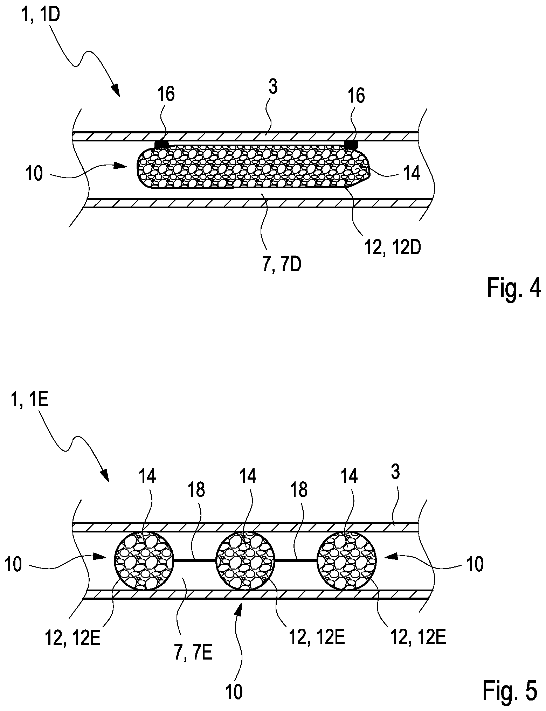

Wie aus Fig. 4 weiter ersichtlich ist, umfasst die Rohbaustruktur 1 im dargestellten vierten Ausführungsbeispiel ein als gerader Träger 1D ausgeführtes Hohlprofil 3. Wie aus Fig. 4 weiter ersichtlich ist, ist die mit Schüttgut 14 gefüllte dehnbare Hülle 12D an zwei Fixierungspunkten 16 an der Wandung des ausgebildeten Hohlraums 7D vorfixiert, so dass das Verstärkungsmittel 10 nicht im Träger 1D verrutschen kann.

Wie aus Fig. 5 weiter ersichtlich ist, umfasst die Rohbaustruktur 1 im dargestellten fünften Ausführungsbeispiel analog zum vierten Ausführungsbeispiel ein als gerader Träger 1E ausgeführtes Hohlprofil 3. Wie aus Fig. 5 weiter ersichtlich ist, sind im dargestellten Ausführungsbeispiel mehrere Verstärkungsmittel 10 in dem Hohlraum 7E angeordnet, welche über Verbindungselemente 18 miteinander verbunden sind. Durch die Länge der Verbindungselemente 18 kann der Abstand zwischen zwei benachbarten Verstärkungsmitteln 10 vorgegeben werden. Im dargestellten fünften Ausführungsbeispiel ist die gemeinsame Hülle 12E der drei Verstärkungsmittel 10 als Schlauch ausgeführt, welcher abschnittsweise mit Schüttgut 14 gefüllt ist. Die nicht mit Schüttgut 14 gefüllten Abschnitte des Schlauchs sind verklebt bzw. verschweißt und bilden die Verbindungselemente 18 zwischen zwei benachbarten Verstärkungsmitteln 10 aus.

Bei Ausführungsformen der vorliegenden Erfindung können zusätzliche Arbeitsschritte zum Herstellen und Fügen von Verstärkungsteilen, Schottelementen in vorteilhafter Weise eingespart werden, so dass eine kostengünstige Herstellung der Rohbaustruktur bzw. des Verstärkungsmittels ermöglicht wird. Ausführungsformen der Erfindung können für Karossen in Schalenbauweise, Spaceframebauweise, Monococks, aber auch für strukturverstärkende Profile und Crashrohre eingesetzt werden.

### BEZUGSZEICHENLISTE

- 1: Rohbaustruktur
- 1A: Verbindungsknoten
- 1B: Knick
- 1C: Verjüngung
- 1D, 1E: Träger
- 3: erstes Hohlprofil
- 5: zweites Hohlprofil
- 7, 7A, 7B, 7C, 7D, 7E: Hohlraum
- 10: Verstärkungsmittel
- 12, 12A, 12B, 12C, 12D, 12E: dehnbare Hülle
- 14: Schüttgut
- 16: Fixierungsstelle
- 18: Verbindungselement

## Patentansprüche

1. Verstärkungsmittel (10) zur Stabilisierung eines durch verbundene Hohlprofile (3, 5) gebildeten Hohlraums (7), umfassend:
- eine dehnbare Hülle (12), und
- Schüttgut (14), welches in der dehnbaren Hülle (12) eingeschlossen ist, wobei das Schüttgut (14) derart ausgestaltet ist, dass es bei Einwirkung einer Aktivierungstemperatur expandiert und sich zu einem Masseblock verbindet, und wobei die dehnbare Hülle (12) derart ausgestaltet ist, dass sie eine Verdichtung und einen Druckaufbau des expandierenden Schüttguts (14) bewirkt.

2. Verstärkungsmittel (10) nach Anspruch 1, **dadurch gekennzeichnet, dass** das Schüttgut (14) als granulatähnliches Füllmaterial überwiegend duroplastische oder thermoplastische Partikel oder überwiegend ein Gemisch aus expandierbarem Material und Füllstoffen wie Blähgas, Metallkugeln, Tonkugeln und/oder Aluminiumpartikeln aufweist.

3. Verstärkungsmittel (10) nach Anspruch 1 oder 2, **dadurch gekennzeichnet, dass** eine wabenähnliche Verstärkung innerhalb der Hülle (12) angeordnet ist, welche vom expandierten Schüttgut (14) eingeschlossen ist.

4. Verstärkungsmittel (10) nach einem der Ansprüche 1 bis 3, **dadurch gekennzeichnet, dass** eine geometrische Grundform der dehnbaren Hülle (12) an eine geometrische Form des Hohlraums (7) angepasst ist.

5. Verstärkungsmittel (10) nach einem der Ansprüche 1 bis 4, **dadurch gekennzeichnet, dass** eine Verbundfolie die dehnbare Hülle (12) ausbildet.

6. Verstärkungsmittel (10) nach Anspruch 5, **dadurch gekennzeichnet, dass** eine Metallfolie und/oder eine textile Deckschicht die Verbundfolie verstärken.

7. Verfahren zur Hohlraumverstärkung einer Rohbaustruktur (1) mit wenigstens einem durch verbundene Hohlprofile (3, 5) gebildeten Hohlraum (7), umfassend folgende Schritte:
- Bereitstellen mindestens eines Verstärkungsmittels (10), welches nach zumindest einem der Ansprüche 1 bis 6 ausgeführt ist,
- Einführen des mindestens einen Verstärkungsmittels (10) in den durch verbundene Hohlprofile (3, 5) gebildeten Hohlraum (7),
- Erwärmen des mindestens einen Verstärkungsmittels (10) auf wenigstens die Aktivierungstemperatur, so dass dessen Schüttgut (14) expandiert und sich zu einem Masseblock verbindet.

8. Verfahren nach 7, **dadurch gekennzeichnet, dass** der Masseblock derart ausgestaltet ist, dass er eine mechanisch stabilisierende Wirkung und/oder eine schalldämmende Wirkung aufweist.

9. Verfahren nach Anspruch 7 oder 8, **dadurch gekennzeichnet, dass** die dehnbare Hülle (12) bei Temperatureinwirkung an der Außenseite aufschmilzt und als Haftvermittler an der zu verstärkenden Rohbaustruktur (1) haftet und diese nach dem Erkalten und Verfestigen verstärkt.

10. Verfahren nach einem der Ansprüche 7 bis 9, **dadurch gekennzeichnet, dass** ein Erwärmen des mindestens einen Verstärkungsmittels (10) während eines Durchlauf eines Trocknungsofens beim Lackierprozess erfolgt.

11. Verfahren nach einem der Ansprüche 7 bis 10, **dadurch gekennzeichnet, dass** mindestens zwei Verstärkungsmittel (10) in einem Hohlraum (7) über ein Verbindungselement (18) miteinander verbunden werden.

12. Verfahren nach 11, **dadurch gekennzeichnet, dass** die mindestens zwei Verstärkungsmittel (10) eine gemeinsame Hülle (12) aufweisen, welche abschnittsweise nicht mit Schüttgut (14) gefüllt wird, wobei der nicht mit Schüttgut (14) gefüllte Abschnitt der Hülle (12) das Verbindungselement (18) zwischen den mindestens zwei Verstärkungsmitteln (10) ausbildet.

## Claims

1. Reinforcement means (10) for stabilising a cavity (7) formed by connected hollow profiles (3, 5), comprising:
- an expandable sheath (12), and
- bulk material (14) enclosed in the expandable sheath (12), wherein the bulk material (14) is adapted to expand and combine into a solid block upon exposure to an activation temperature, and wherein the expandable sheath (12) is adapted to cause compaction and pressure build-up of the expanding bulk material (14).

2. Reinforcement means (10) according to claim 1, **characterised in that** the bulk material (14) has, as granulate-like filling material, predominantly thermosetting or thermoplastic particles or predominantly a mixture of expandable material and fillers such as expanded gas, metal balls, clay balls and/or aluminium particles.

3. Reinforcement means (10) according to claim 1 or 2, **characterised in that** a honeycomb-like reinforcement is arranged within the sheath (12), which is enclosed by the expanded bulk material (14).

4. Reinforcement means (10) according to any one of claims 1 to 3, **characterised in that** a geometric basic shape of the expandable sheath (12) is adapted to a geometric shape of the cavity (7).

5. Reinforcement means (10) according to any one of claims 1 to 4, **characterised in that** a composite film forms the expandable sheath (12).

6. Reinforcement means (10) according to claim 5, **characterised in that** a metal foil and/or a textile cover layer reinforce(s) the composite film.

7. Method for reinforcing a cavity reinforcement in a carcass structure (1) having at least one cavity (7) formed by connected hollow profiles (3, 5), comprising the following steps:
- providing at least one reinforcement means (10) implemented according to at least one of claims 1 to 6,
- introducing the at least one reinforcement means (10) into the cavity (7) formed by connected hollow profiles (3, 5),
- heating the at least one reinforcement means (10) to at least the activation temperature so that its bulk material (14) expands and combines to form a solid block.

8. Method according to claim 7, **characterised in that** the solid block is adapted to have a mechanical stabilising effect and/or a sound-insulating effect.

9. Method according to claim 7 or 8, **characterised in that** the expandable sheath (12) melts when exposed to temperature on the outside and adheres as an adhesion promoter to the carcass structure (1) that is to be reinforced and after cooling and solidification reinforces it.

10. Method according to any one of claims 7 to 9, **characterised in that** heating of the at least one reinforcement agent (10) takes place during a passage through a drying oven in the painting process.

11. Method according to any one of claims 7 to 10, **characterised in that** at least two reinforcement means (10) are connected to one another in a cavity (7) via a connecting element (18).

12. Method according to claim 11, **characterised in that** the at least two reinforcement means (10) have a common sheath (12) which in sections is not filled with bulk material (14), the section of the sheath (12) not filled with bulk material (14) forming the connecting element (18) between the at least two reinforcement means (10).

## Revendications

1. Moyen de renforcement (10) pour stabiliser une cavité (7) formée par des profilés creux (3, 5) reliés, comprenant :
- une enveloppe extensible (12), et
- un produit en vrac (14) qui est introduit dans l'enveloppe extensible (12), dans lequel le produit en vrac (14) est conçu de telle sorte qu'il se dilate sous l'action d'une température d'activation et se lie pour former un bloc massif, et dans lequel l'enveloppe extensible (12) est conçue de telle sorte qu'elle induit une compression et une montée en pression du produit en vrac (14) en cours de dilation.

2. Moyen de renforcement (10) selon la revendication 1, **caractérisé en ce que** le produit en vrac (14) présente, en tant que produit de remplissage de type granulé, principalement des particules thermodurcissables ou thermoplastiques ou principalement un mélange de matière dilatable et de charges telles que du gaz expansible, des billes métalliques, des billes d'argile et/ou des particules d'aluminium.

3. Moyen de renforcement (10) selon la revendication 1 ou 2, **caractérisé en ce qu'**un renforcement en forme de nid d'abeille est agencé à l'intérieur de l'enveloppe (12), lequel renforcement est entouré par le produit en vrac (14) dilaté.

4. Moyen de renforcement (10) selon l'une quelconques des revendications 1 à 3, **caractérisé en ce qu'**une forme géométrique de base de l'enveloppe extensible (12) est adaptée à une forme géométrique de la cavité (7).

5. Moyen de renforcement (10) selon l'une quelconque des revendications 1 à 4, **caractérisé en ce qu'**un film composite réalise l'enveloppe extensible (12).

6. Moyen de renforcement (10) selon la revendication 1, **caractérisé en ce qu'**une feuille de métal et/ou une couche supérieure textile renforce(nt) le film composite.

7. Procédé de renforcement de cavité d'une structure de carrosserie brute (1) avec au moins une cavité (7) formée par des profilés creux (3, 5) reliés, comprenant les étapes suivantes consistant à :
- fournir au moins un moyen de renforcement (10) qui est réalisé selon au moins l'une quelconque des revendications 1 à 6,
- insérer le au moins un moyen de renforcement (10) dans la cavité (7) formée par des profilés creux (3, 5) reliés,
- chauffer le au moins un moyens de renforcement (10) à au moins la température d'activation, de sorte que son produit en vrac (14) se dilate et se lie pour former un bloc massif.

8. Procédé selon la revendication 7, **caractérisé en ce que** le bloc massif est conçu de telle sorte qu'il présente un effet de stabilisation mécanique et/ou un effet d'insonorisation.

9. Procédé selon la revendication 7 ou 8, **caractérisé en ce que** l'enveloppe extensible (12) fond au niveau du côté extérieur par l'effet de la température et adhère comme promoteur d'adhérence à la structure de carrosserie brut (1) à renforcer et la renforce après refroidissement et solidification.

10. Procédé selon l'une quelconque des revendications 7 à 9, **caractérisé en ce que** le au moins un moyen de renforcement (10) est chauffé lors d'un passage dans un four de séchage pendant un processus de peinture.

11. Procédé selon l'une quelconque des revendications 7 à 10, **caractérisé en ce qu'**au moins deux moyens de renforcement (10) sont reliés entre eux dans une cavité (7) par l'intermédiaire d'un élément de liaison (18).

12. Procédé selon la revendication 11, **caractérisé en ce que** les au moins deux moyens de renforcement (10) présentent une enveloppe commune (12) qui n'est pas remplie par endroits avec du produit en vrac (14), dans lequel l'endroit de l'enveloppe (12) qui n'est pas rempli avec du produit en vrac (14) réalise l'élément de liaison (18) entre les au moins deux moyens de renforcement (10).
